# EUROPÄISCHE PATENTSCHRIFT

(11) **EP 2 013 586 B1**
(45) Veröffentlichungstag und Bekanntmachung des Hinweises auf die Patenterteilung: **26.01.2011**
(21) Anmeldenummer: 07727338.1
(22) Anmeldetag: 26.03.2007
(51) Int. Cl.: G01D 5/14

(54) **MAGNETISCHER DREHWINKELGEBER**
MAGNETIC ROTATIONAL ANGLE TRANSDUCER
DÉTECTEUR D'ANGLE DE ROTATION MAGNÉTIQUE

(30) Priorität: 21.04.2006 DE 102006018627
(43) Veröffentlichungstag der Anmeldung: 14.01.2009
(73) Patentinhaber: Continental Automotive GmbH, 30165 Hannover (DE)
(72) Erfinder: WAGNER, Matthias, 63263 Neu Isenburg (DE); WIESE, Peter, 65779 Kelkheim (DE)
(86) Internationale Anmeldenummer: PCT/EP2007/052865
(87) Internationale Veröffentlichungsnummer: WO 2007/122055

(56) Entgegenhaltungen:
- EP-A- 1 467 184
- DE-A1- 19 731 555
- DE-A1- 19 753 776

## Beschreibung

Die vorliegende Erfindung befasst sich mit einem magnetischen Drehwinkelgeber mit einem Magnetfeld bestimmter Ausbildung und wenigstens einem Hall-Sensor, die relativ zueinander drehbar sind, wobei der Hall-Sensor zu der Drehachse versetzt angeordnet ist, die beiden Hauptrichtungen des wenigstens einen flächigen Hall-Sensors radial und axial zur Drehachse und in einer Mittellage parallel zu den Feldlinien des Magnetfeldes in dieser Mittellage liegen und das Magnetfeld durch wenigstens einen um die Drehachse verlaufenden, teilringförmigen Permanentmagneten ausgebildet ist, wobei der Hall-Sensor zu dem teilringförmigen Permanentmagneten hin von der Drehachse versetzt angeordnet ist.

In vielen Anwendungsfällen ist es erforderlich, mit Hilfe eines Drehwinkelgebers eine Information über die absolute Winkellage einer Welle zu erhalten, wobei in einigen Fällen wiederum unmittelbar nach Einschalten eines Systems die Information verfügbar sein muss. Ein solches Anwendungsbeispiel ist beispielsweise die Drosselklappenwelle eines Kraftfahrzeuges, bei der sich der Einsatz eines inkrementalen Lagegebers verbietet, da dieser bei Systemstart eine Referenzfahrt durchführen muss, wobei eine mechanische Endlage angefahren wird. Bei einer Drosselklappenwelle würde dies in der einen Endlage zu einem Absterben des Motors und in der anderen Endlage zu einer Vollgasstellung der Drosselklappe führen, wenn der Motor bereits gestartet ist. Eine Referenzfahrt vor dem Starten des Motors würde zu einer vom Kunden nicht akzeptierten Zeitverzögerung führen. Auch aus Sicherheitserwägungen, sind inkrementale Lagegeber nicht optimal, weil die Befürchtung besteht, dass während des Betriebes durch Störungen auf den Leitungen, wie sie z. B. durch die Zündung hervorgerufen werden können, eine Bewegung der überwachten Welle vorgetäuscht wird, was zu erheblichen funktionalen Problemen führen kann.

Die zuvor erwähnten Bedenken treffen beispielsweise auf die ebenfalls schon erwähnte Drosselklappenwelle eines Fahrzeuges zu. Dort werden beispielsweise sog. magneto-resistive Sensoren (siehe z. B. DE 197 31 555 A1) oder mit induktiven Verfahren arbeitende Sensoren eingesetzt. Grundsätzlich sind diese zwar geeignet, die Anforderungen zu erfüllen, jedoch liegen die Herstellungskosten auf einem relativ hohen Niveau, insbesondere auch, weil eine aufwändige digitale Signalverarbeitung erforderlich ist, um die Ausgangssignale der Sensoren zu linearisieren. Ein bekannter permanentmagnetischer Sensor ist auch der analoge Hall-Sensor. Bei diesem ist die Signalkonditionierung erheblich einfacher und bei geschickter Auslegung ist gar keine digitale Signalverarbeitung notwendig. Allerdings ist das Zusammenspiel eines Hall-Sensors mit einem Magnetfeld mit Nachteilen behaftet, weil bei einfachen magnetischen Kreisen der lineare Messbereich eines Hallsensors nicht ausreicht. Das Ausgangssignal eines in einem Magnetfeld mit paralleler Ausrichtung der Feldlinien verdrehten Hall-Sensors folgt entsprechend der Projektion des Feldes auf die sensitive Fläche des Hall-Elements einer Sinuskurve, so dass bei senkrechter Ausrichtung des Feldes zur Hall-Ebene das maximale Signal erzeugt wird, die Steigung an dieser Stelle aber gleich Null ist, so dass dieser Kennlinienbereich kaum nutzbar ist. Ohne aufwändige Signalverarbeitung ergibt sich bei einer Sinuskurve lediglich in einem Bereich von +/- 20° um den Nulldurchgang ein ausreichend linearer Signalverlauf, während beispielsweise für die Erfassung der Drosselklappenstellung ein Messbereich von >90° gefordert wird, so dass ein linearer Bereich von wenigstens +/- 45° um den Nulldurchgang notwendig wäre.

Eine zufriedenstellend arbeitende, gleichzeitig aber sehr aufwändige Lösung des Problems besteht darin, mit Hilfe von Eisenkreisen den Flussverlauf zu linearisieren (siehe beispielsweise EP 0 665 416 B1 oder.die EP 1 467 184 A1). Durch den Aufwand für die Eisenkreise wird allerdings der Kostenvorteil des Hall-Sensors gegenüber den eingangs genannten Prinzipien zum größten Teil wieder aufgezehrt, , zumal für die Magnete Materialien aus seltenen Erden, wie z. B. Samarium-Kobalt eingesetzt werden müssen, die sehr teure Magnetwerkstoffe darstellen. Hinzu muss darauf geachtet werden, dass für die Flussleitstücke ein sehr niederkoerzitives Material eingesetzt werden muss, um Hysterese-Effekte bei wechselnden Bewegungsrichtungen zu vermeiden.

Eine Lösung für einen Drehwinkelgeber mit einem Hall-Sensor ist aus der EP 1 069 400 B1 bekannt. Dort wird durch eine gezielte Beeinflussung des Magnetfeldes ein in einem größeren Winkelbereich linearisiertes Ausgangssignal eines Hall-Sensors erreicht, dessen Fläche radial und senkrecht zur Drehachse liegt. Problematisch bei einem solchen Drehwinkelgeber ist, dass Lagerabweichungen des Sensors in Bezug auf das Magnetfeld den Signalausgang in unerwünschter Weise beeinflussen können, so dass bei einer Montage des Sensors auf eine besonders genaue Positionierung des Hall-Sensors innerhalb des Magnetfeldes zu achten ist, die beispielsweise bei der Montage von Drosselklappengehäuse nicht immer ohne weiteres gegeben ist. Hinzu kommt, dass oftmals zwei redundante Kanäle mit möglichst identischem Signalausgang gefordert sind, die bei der in der EP 1 069 400 B1 beschriebenen Lösung nicht ohne weiteres zu realisieren sind, da bei Anordnung von zwei Messaufnehmern nebeneinander zwangsläufig ein Phasenversatz zwischen den Ausgangssignalen der Hall-Sensoren auftritt.

Ein magnetischer Drehwinkelgeber der eingangs beschriebenen Art ist aus der EP 1 503 183 A1 bekannt.

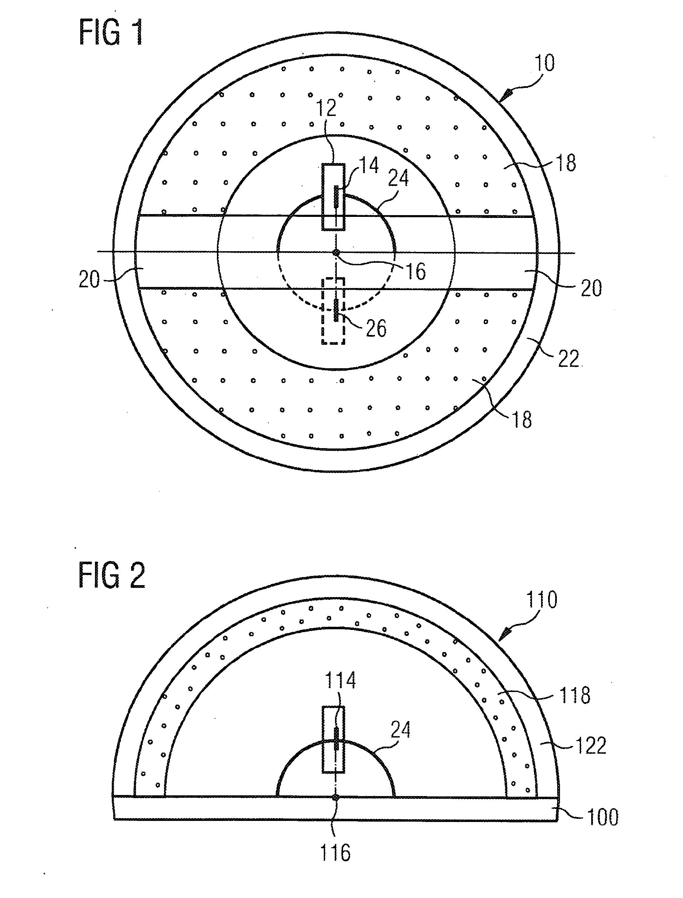

Es hat sich gezeigt, dass ein solcher Drehwinkelgeber, wie er in Fig. 1, Fig. 3 und Fig. 5a bis e gezeigt ist, den Vorteil bietet, dass sich von mindestens +/- 60° um den Nulldurchgang ein linearer Signalausgang erreichen lässt. Eine Signalaufbereitung und insbesondere eine digitale Signalverarbeitung können bei einem solchen Ausgangsverhalten entfallen. Darüber hinaus hat sich gezeigt, dass der erfindungsgemäße Drehwinkelgeber sehr unempfindlich gegenüber mechanischen Lagetoleranzen des Hall-Sensors in Bezug auf das Magnetfeld ist. Untersuchungen haben ergeben, dass eine Verlagerung von 0,1 mm in radialer Richtung lediglich eine Beeinflussung des Ausgangssignals von 0,2% nach sich zogen, so dass bei den beispielsweise bei der Montage eines Drosselklappengehäuses zu erwartenden Toleranzen keine bedenklichen Signalverfälschungen zu erwarten sind. Es hat sich ferner überraschenderweise gezeigt, dass sogar in tangentialer Richtung Verschiebungen im Bereich von 0,1 mm lediglich Fehler in der zuvor erwähnten Größenordnung im Bereich der Mittellage nach sich ziehen, was ebenfalls als unbedenklich gelten kann. Im Übrigen bezieht sich die Umschreibung teilringförmig auf den Querschnitt des Permanentmagneten, der selbstverständlich eine bestimmte Tiefe besitzt, tatsächlich also die Form eines Teilhohlzylinders besitzt.

Axiale Verschiebungen in Bezug auf die Drehachse bleiben angesichts der Höhe der teilzylindrisch geformten Permanentmagneten ohne Auswirkung, so lange sie sich in einem normalen Rahmen bewegen.

Die Aufgabe der vorliegenden Erfindung besteht darin, einen vereinfachten permanentmagnetischen Drehwinkelgeber zu schaffen.

Erfindungsgemäß ist eine Kurzschlussebene aus ferromagnetischem Material vorgesehen, die bis an die Drehachse heranreicht, wobei der Hall-Sensor zu dem einzigen teilringförmigen Permanentmagneten hin versetzt ist.

In einer besonders bevorzugten Ausführungsform der Erfindung ist vorgesehen, dass das Magnetfeld spiegelsymmetrisch um eine Spiegelebene ausgebildet ist, die parallel zu den Feldlinien in der Mittellage des Hall-Sensors liegt, so dass sich in der Mittellage des Sensors auch der Mittelpunkt des linearen Messbereichs befindet. Zwischen den beiden Enden des teilringförmigen Permanentmagneten und der Kurzschlussebene kann jeweils ein Spalt ausgebildet sein, deren Wandungen beispielsweise parallel zueinander liegen.

Die Ausbildung eines achsensymmetrischen Magnetfeldes, das dennoch die gewünschte Linearisierung des Ausgangssignals des Hall-Sensors bewirkt, ermöglicht den Einsatz eines zweiten Hall-Sensors mit einem absolut gleichlaufenden Ausgangsverhalten wie der erste Sensor. Dies wird dadurch erreicht, dass der erste Hall-Sensor zu dem ersten teilringförmigen Permanentmagneten hin von der Drehachse versetzt und ein zweiter Hall-Sensor spiegelsymmetrisch zu dem zweiten teilringförmigen Permanentmagneten hin von der Drehachse versetzt angeordnet ist. Damit können zwei identische Hall-Sensoren jeweils in einem Feldbereich unter identischen Feldeigenschaften bewegt werden.

Die gewünschte Ausbildung des Magnetfeldes lässt sich'mit unterschiedlichen Polarisierungsrichtungen der Permanentmagnete erreichen. Besonders bevorzugt ist es, den wenigstens einen teilringförmigen Permanentmagneten in radialer Richtung zu polarisieren, so dass sich in Verbindung mit einem weiteren Permanentmagneten oder einer Kurzschlussebene der gewünschte Feldlinienverlauf ergibt. Etwas ungünstiger, aber für die meisten Anwendungsfälle dennoch hinreichend ist eine Ausführungsform, bei welcher der wenigstens eine teilringförmige Permanentmagnet in diametraler Richtung polarisiert ist, d. h. in einer Grundrichtung parallel zur Sensorfläche des Hall-Sensors in der Mittellage. Es ist anzumerken, dass eine rein radiale oder rein diametrale Magnetisierung teilringförmiger Permanentmagneten in der Praxis kaum zu erreichen ist und fließende Übergänge zwischen diesen Magnetisierungsformen möglich sind.

In einer noch weiter bevorzugten Ausführungsform der Erfindung ist vorgesehen, dass um den wenigstens einen teilringförmigen Permanentmagneten ein geschlossener Ring aus ferromagnetischem Material angeordnet ist. Dieser ist sowohl für die Ausbildung des Magnetfeldes innerhalb der Ringform von Bedeutung, als auch dafür, das System gegen magnetische Fremdfelder abzuschirmen, die durch den äußeren ferromagnetischen Ring an dem Messaufnehmer vorbeigeleitet werden.

Ein weiterer grundsätzlicher Vorteil des erfindungsgemäßen Drehwinkelgebers besteht darin, dass ohne weiteres ein relativ großes Magnetvolumen möglich ist, so dass preiswerte Hartferrite als Magnetmaterial in Frage kommen, die problemlos innerhalb eines Rückschlussringes magnetisiert werden können. Ein weiterer Vorteil dieser Art der Magnetisierung besteht darin, dass die Magnete nach der Magnetisierung durch einen leichten "Gegenmagnetisierpuls" vorgealtert werden können, um Lebensdauereffekte vorwegzunehmen.

Nachfolgend wird anhand der beigefügten Zeichnungen näher auf Ausführungsbeispiele der Erfindung eingegangen. Es zeigen:
- Fig. 1: schematisch einen Querschnitt eines bekannten magnetischen Drehwinkelgebers;
- Fig. 2: eine Ausführungsform eines magnetischen Drehwinkelgebers im Querschnitt;
- Fig. 3: den Querschnitt aus Fig. 1 sowie eine Darstellung des Feldlinienverlaufs in dem Sensor bei bevorzugt radialer Magnetisierung der Magnete;
- Fig. 4: den bekannten Drehwinkelgeber aus Fig. 1 mit diametral magnetisierten Permanentmagnetelementen und entsprechend geändertem Feldlinienverlauf;
- Fig. 5a - 5c: schematische Darstellungen des aus dem Stand der Technik bekannte Hall-Sensors und seiner Lager relativ zu den Feldlinien bei unterschiedlichen Drehwinkeln.

In Fig. 1 ist vereinfacht ein aus dem Stand der Technik bekannter magnetischer Drehwinkelgeber 10 gezeigt, der einen auf einer Leiterplatte 12 angeordneten Hall-Sensor 14 aufweist, dessen Sensorfläche mit Abstand zu einer Drehachse 16 liegt, wobei die beiden Hauptrichtungen der Sensorfläche radial und axial bezüglich der Drehachse 16 ausgerichtet sind. Der Hall-Sensor 14 ist relativ zu einem Magnetfeld drehbar, das durch zwei Permanentmagneten 18 ausgebildet ist, die spiegelsymmetrisch zueinander angeordnet sind. Die beiden Permanentmagneten 18 sind dabei jeweils im Querschnitt teilringförmig ausgebildet, d. h. sie besitzen eine teilhohlzylindrische Form. Die beiden teilringförmigen Permanentmagneten 18 erstrecken sich nahezu jeweils über einen Halbkreis, wobei allerdings zwischen den jeweiligen Enden der beiden Permanentmagnete 18 ein Spalt 20 verbleibt. Die durch die Enden der teilringförmigen Magnete 18 gebildeten Spaltwandungen verlaufen parallel.

Um die beiden teilringförmigen Permanentmagnete 18 ist ein geschlossener Ring 22 aus ferromagnetischem Material vorgesehen, der weniger für die Ausbildung des Magnetfeldes innerhalb der Ringform von Bedeutung ist, sondern primär das System gegen magnetische Fremdfelder abschirmt, die durch den äußeren ferromagnetischen Ring an dem Messaufnehmer vorbeigeleitet werden.

Der Hall-Sensor 14 ist bei dem gezeigten Ausführungsbeispiel stationär angeordnet, während das Magnetrad als Verbund aus den beiden teilringförmigen Permanentmagneten 18 und dem geschlossenen Ring 22 drehstarr mit einer Welle (nicht gezeigt), insbesondere einer Drosselklappenwelle verbunden ist. In Fig. 1 ist mit 24 die Bewegungsbahn des Hall-Sensors relativ zu dem Magnetrad bezeichnet. Es ist aber auch ohne weiteres möglich, den Hall-Sensor der Welle zuzuordnen und den Verbund aus Permanentmagneten und Ring stationär vorzusehen.

Zur Darstellung eines redundanten Systems mit zwei unabhängig voneinander generierten Ausgangssignalen ist es aufgrund der symmetrischen Gestaltung des Verbundes aus Permanentmagneten und Ring 22 ebenfalls aus dem Stand der Technik bekannt, einen zweiten Hall-Sensor 26 (in Fig. 1 gestrichelt dargestellt) spiegelsymmetrisch zu dem ersten Hallsensor 14 anzuordnen. Da sich bei einander entsprechend magnetisierten Permanentmagneten, worauf später noch näher eingegangen wird, ein punktsymmetrisches Magnetfeld um die Drehachse 16 ergibt, entspricht auch das Feldlinienmuster in der Bewegungsbahn des zweiten Hall-Sensors 26 dem Feldlinienmuster in der Bewegungsbahn des ersten Hallsensors 14, so dass die beiden Ausgangssignale identisch sind.

Sofern nur ein einziges Ausgangssignal ohne redundante Eigenschaften des Drehwinkelgebers gefordert ist, kann auch die in Fig. 2 gezeigte vereinfachte Ausführungsform eines Drehwinkelgebers 110 zum Einsatz kommen, bei welchem eine Hälfte des symmetrischen Verbundes durch eine Kurzschlussebene 100 aus ferromagnetischem Material ersetzt ist. Entsprechend ist nur ein teilringförmiger Permanentmagnet 118 vorgesehen, der allerdings vollständig halbkreisförmig ausgebildet ist und mit seinen Enden bis an die Kurzschlussebene 100, die durch die Drehachse 116 verläuft, heranreicht. Entsprechend ist auch der äußere Ring 122 nur halbkreisförmig ausgeführt und endet an der Kurzschlussebene 100.

Die das Magnetfeld ausbildenden Elemente sind wiederum drehstarr mit einer nicht sichtbaren Welle verbunden, wobei allerdings bedingt durch die Kurzschlussebene 100 der Verdrehwinkel zwischen dem Magnetfeld und dem Hall-Sensor auf der Bewegungsbahn 124 auf unter 180° begrenzt ist. In der Praxis ist dies weniger von Bedeutung, weil zu den äußersten Randbereichen des Drehwinkels hin die Linearität des Ausgangssignals des Drehwinkelgebers ohnehin leidet.

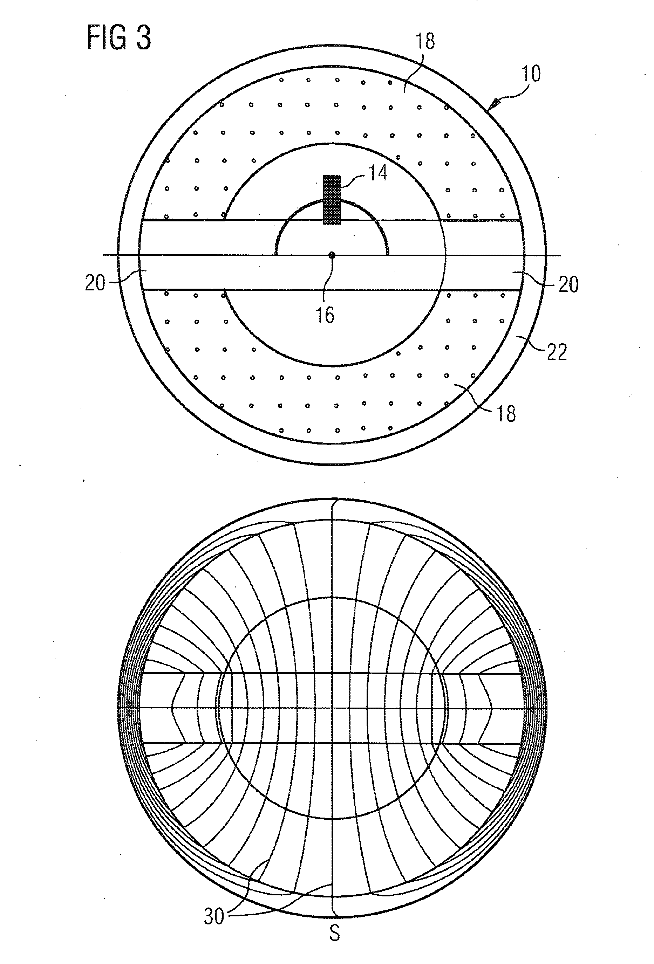

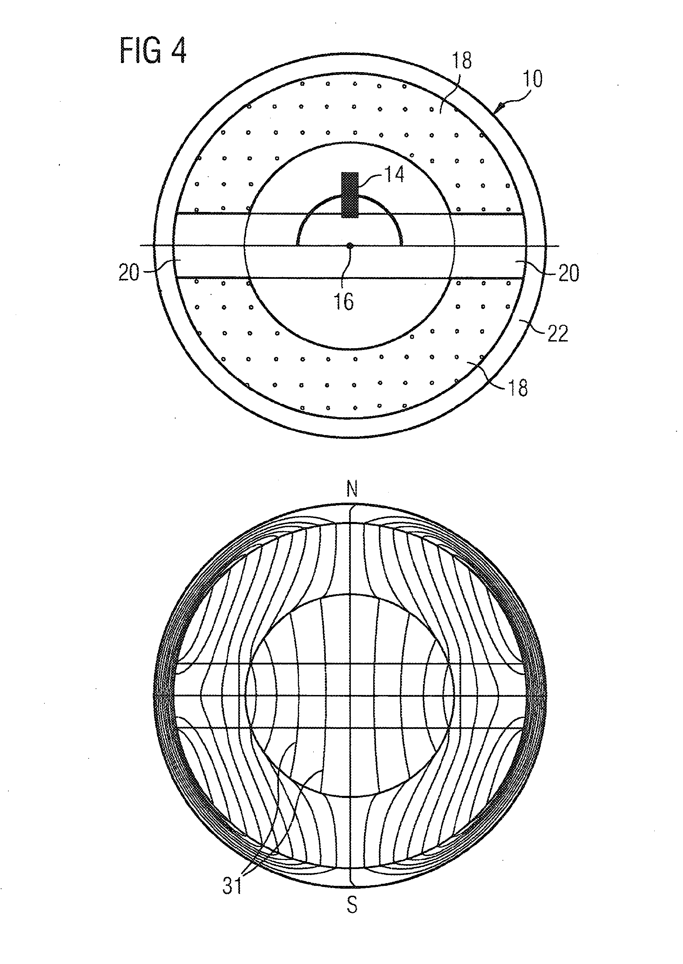

In Fig. 3 ist nochmals der Drehwinkelgeber 10 aus Fig. 1 gezeigt, wobei außerdem die Feldlinien 30 des Magnetfeldes in einer weiteren Darstellung skizziert sind, wie diese sich ergeben, wenn die beiden teilringförmigen Permanentmagnete in einer radialen Richtung bezüglich der Drehachse 16 magnetisiert sind. Radiale Richtung meint, dass einer der beiden Pole der Permanentmagnete 18 an der konvexen Außenfläche liegt, während der andere Pol vorzugsweise an der konkaven Innenfläche liegt. Gegenübergestellt ist in Fig. 4 ein von seiner konstruktiven Ausbildung her identischer Drehwinkelgeber 10, dessen Permanentmagnete 18 in diametraler Richtung magnetisiert sind, d. h. die Polarisierung der teilringförmigen Permanentmagnete 18 erfolgt nicht radial in Bezug auf die Drehachse 16, sondern tendenziell eher linear parallel zu der horizontal liegenden Mittelebene.

Wie sich aus einem Vergleich der Feldlinienverläufe unschwer erkennen lässt, entsprechen die praktisch erreichbaren Feldlinienverläufe nur annähernd dem zuvor skizzierten Idealbild.

Es hat sich gezeigt, dass sich mit der radialen Polarisierungsrichtung gemäß Fig. 3 eine noch günstigere Linearisierung des Ausgangssignals des Hall-Sensors 14 erreichen lässt, so dass sich ein Winkelbereich von ungefähr +/-60° unter nahezu linearem Verlauf erreichen lässt. Bei der Ausführungsform mit diametral magnetisiertem Permanentmagneten ergibt sich ein geringfügig ungünstigeres Bild, allerdings liegt der nutzbare Drehwinkelbereich immer noch in einem Bereich zwischen +/-50°, was für viele Anwendungen, wie beispielsweise bei einer Drosselklappenwelle, ebenfalls hinreichend ist.

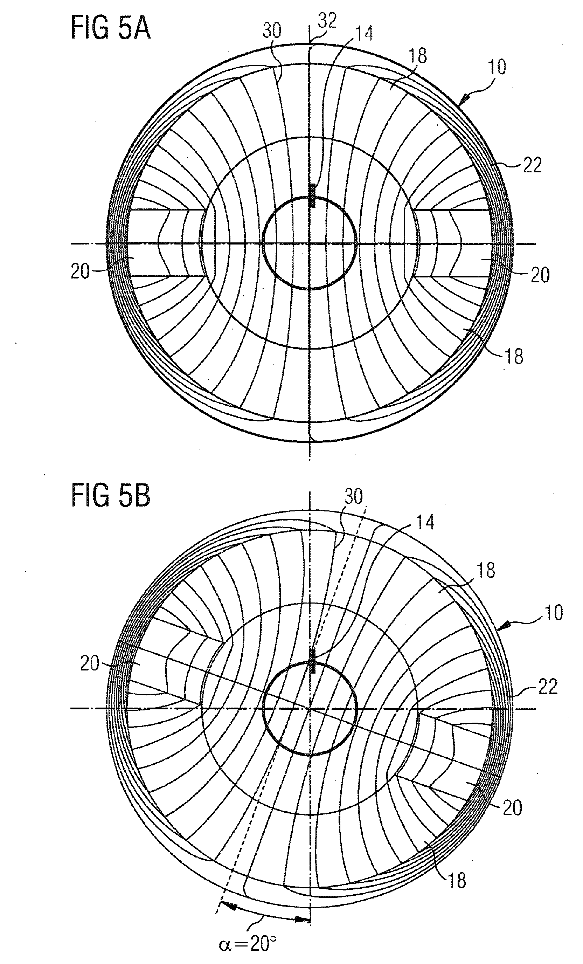

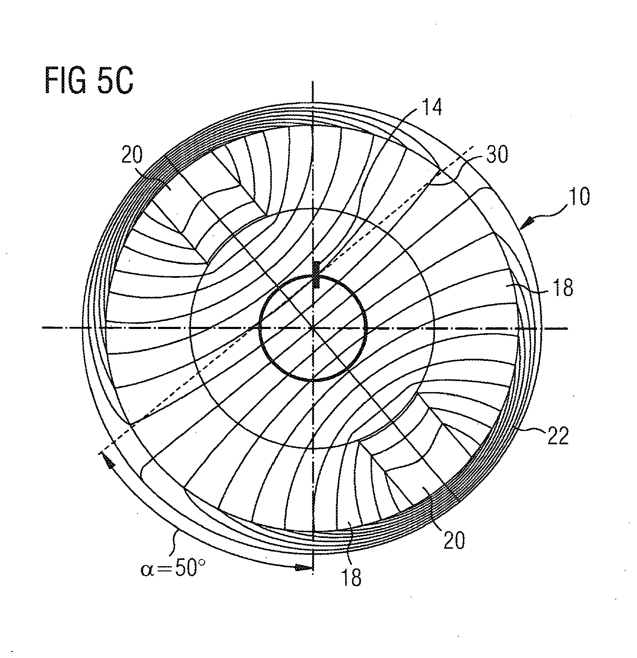

In Fig. 5A, B und C wird nunmehr auf die Ausrichtung der Feldlinien des in Fig. 1 und 3 gezeigten Signalgebers in Bezug auf die Wirkfläche des Hall-Sensors 14 eingegangen. In Fig. 5 a ist die Mittellage gezeigt, die einem Winkel von 0° entspricht. Die Feldlinien 30 auf der Mittelsenkrechten 32 weisen dabei keine Tangentialkomponente auf, d. h. das Messsignal des Aufnehmers in der Mittellage ist gleich Null und somit gleichbedeutend mit dem Nulldurchgang.

Bei einem Magnetfeld mit rein parallel zueinander liegenden Feldlinien würde sich bei einem Verschwenken des Hall-Sensors auf einer Kreisbahn bis in eine Winkellage von 90° ein sinusförmiger Verlauf des Ausgangssignals ergeben.

Die gewählte Anordnung aus teilringförmigen Permanentmagneten führt im mittleren Bereich letztlich zu einem Feldlinienverlauf, bei welchem die Feldlinien mit zunehmendem Abstand von der Horizontalebene einen größeren Abstand zueinander aufweisen. Dies bedeutet, dass sich bei einem Verschwenken aus der Mittellage zunächst ein flacherer Anstieg des Ausgangssignals ergibt. Da insgesamt kein höherer Absolutwert des höchstmöglichen Ausgangssignals erreicht werden kann, ist dies notwendig, um einen größeren linearen Bereich zur Verfügung zu haben. Mit zunehmendem Schwenkwinkel (siehe Fig. 5b für die 20°-Stellung und Fig. 5c für die 50°-Stellung, wobei das Magnetrad gegenüber dem stationären Hall-Sensor 14 im Uhrzeigersinn verdreht ist) ist erkennbar, dass die Krümmung der Feldlinien mit zunehmendem Winkel progressiv ansteigt, so dass eine Linearisierung des Ausgangssignals bis zu einem bestimmten Grenzwinkel stattfindet, oberhalb dessen kein weiterer linearer Anstieg mehr zu erreichen ist. Die extremste Form der Linearisierung, eine Dreiecksdachform, lässt sich mit der beschriebenen Anordnung zwar nicht erreichen, der lineare Signalverlauf über einen Schwenkwinkel von 120° (+/-60°) ist jedoch beispielsweise für die Anwendung zur Erfassung der Stellung einer Drosselklappenwelle ausreichend.

Aus Fig. 5A bis C lässt sich auch gut erkennen, dass ein spiegelsymmetrisch zu dem ersten Hall-Sensor 14 angeordneter zweiter Hall-Sensor 26 sich in einer entsprechenden Lage zu magnetischen Feldlinien befindet, so dass beide Hall-Sensoren ein absolut identisches Ausgangssignal erzeugen können. Es versteht sich, dass die gezeigten Verläufe der Feldlinien der Magnetfelder dann erreicht werden, wenn die beiden teilringförmigen Magnetelemente in Bezug zueinander entgegengesetzt magnetisiert sind, d. h. beispielsweise mit Bezug auf Fig. 5A-C besitzt der obere Permanentmagnet seinen Nordpol beispielsweise an der konvexen Außenseite, während der untere Permanentmagnet dann an seiner konvexen Außenseite seinen Südpol besitzt.

## Patentansprüche

1. Magnetischer Drehwinkelgeber, mit einem Magnetfeld bestimmter Ausbildung und wenigstens einem Hall-Sensor (114), die relativ zueinander drehbar sind, wobei der Hall-Sensor (114) zu der Drehachse (116) versetzt angeordnet ist, die beiden Hauptrichtungen des wenigstens einen flächigen Hall-Sensors (114) radial und axial zur Drehachse (116) und in einer Mittellage parallel zu den Feldlinien des Magnetfeldes in dieser Mittellage liegen und das Magnetfeld durch einen um die Drehachse (116) verlaufenden, teilringförmigen Permanentmagneten (118) ausgebildet ist, wobei der Hall-Sensor (114) zu dem teilringförmigen Permanentmagneten (118) hin von der Drehachse (116) versetzt angeordnet ist, wobei eine Kurzschlussebene (100) aus ferromagnetischem Material vorgesehen ist, die bis an die Drehachse (116) heranreicht, wobei der Hall-Sensor (114) zu dem einzigen teilringförmigen Permanentmagneten (118) hin versetzt ist und das Magnetfeld spiegelsymmetrisch um eine Spiegelebene ausgebildet ist, die parallel zu den Feldlinien in der Mittellage des Hall-Sensors (114) liegt.

2. Magnetischer Drehwinkelgeber nach Anspruch 1, bei dem zwischen den Enden des teilringförmigen Permanentmagnetes (18) und der Kurzschlussebene jeweils ein Spalt ausgebildet ist.

3. Magnetischer Drehwinkelgeber nach Anspruch 2, bei dem die Wandungen der Spalte (20) parallel zueinander liegen.

4. Magnetischer Drehwinkelgeber nach einem der vorhergehenden Ansprüche, bei dem der teilringförmige Permanentmagnet (118) in radialer Richtung bezüglich der Drehachse polarisiert ist.

5. Magnetischer Drehwinkelgeber nach einem der Ansprüche 1 bis 3, bei dem der wenigstens eine teilringförmige Permanentmagnet (118) in diametraler Richtung parallel zur Sensorfläche des Hall-Sensors (114) in der Mittellage polarisiert ist.

6. Magnetischer Drehwinkelgeber nach einem der Ansprüche 1 bis 5, bei dem der teilringförmige Permanentmagnet (118) halbkreisförmig ausgebildet ist und von einem halbkreisförmigen Ring aus ferromagnetischem Material umgeben ist, der bis an die Kurzschlussebene (100) heranreicht.

7. Verwendung eines magnetischen Drehwinkelgebers nach einem der vorhergehenden Ansprüche zur Bestimmung der Winkellage einer Drosselklappenwelle einer Verbrennungskraftmaschine.

## Claims

1. Magnetic rotational angle transducer, having a magnetic field with a specific configuration and at least one Hall sensor (114) which can rotate relative to one another, wherein the Hall sensor (114) is arranged offset with respect to the rotational axis (116), the two main directions of the at least one planar Hall sensor (114) are located radially and axially with respect to the rotational axis (116) and in a central position parallel to the field lines of the magnetic field in this central position, and the magnetic field is formed by a circular segment-shaped permanent magnet (118) which runs around the rotational axis (116), wherein the Hall sensor (114) is arranged offset from the rotational axis (116) toward the circular segment-shaped permanent magnet (118), wherein a short-circuit plane (100) made of ferromagnetic material which extends as far as the rotational axis (116) is provided, wherein the Hall sensor (114) is offset toward the single circular segment-shaped permanent magnet (118), and the magnetic field is embodied so as to be mirror-symmetrical about a mirror plane which is located parallel to the field lines in the central position of the Hall sensor (114).

2. Magnetic rotational angle transducer according to Claim 1, in which in each case a gap is formed between the ends of the circular segment-shaped permanent magnet (18) and the short-circuit plane.

3. Magnetic rotational angle transducer according to Claim 2, in which the walls of the gaps (20) are located parallel to one another.

4. Magnetic rotational angle transducer according to one of the preceding claims, in which the circular segment-shaped permanent magnet (118) is polarized in the radial direction with respect to the rotational axis.

5. Magnetic rotational angle transducer according to one of Claims 1 to 3, in which the at least one circular segment-shaped permanent magnet (118) is polarized in the diametric direction parallel to the sensor face of the Hall sensor (114) in the central position.

6. Magnetic rotational angle transducer according to one of Claims 1 to 5, in which the circular segment-shaped permanent magnet (118) is of semicircular design and is surrounded by a semicircular ring made of ferromagnetic material which extends as far as the short-circuit plane (100).

7. Use of a magnetic rotational angle transducer according to one of the preceding claims for determining the angular position of a throttle valve shaft of an internal combustion engine.

## Revendications

1. Détecteur magnétique d'angle de rotation, avec un champ magnétique ayant une configuration déterminée et au moins un détecteur de Hall (114), lesquels peuvent être orientés l'un par rapport à l'autre, où le détecteur de Hall (114) est décalé par rapport à l'axe de rotation (116), où les deux directions principales du au moins un détecteur plan de Hall (114) sont, radialement et axialement par rapport à l'axe de rotation (116) et dans une position moyenne, parallèles aux lignes de champ du champ magnétique dans cette position moyenne et où le champ magnétique est formé par un aimant permanent (118) à forme d'anneau partiel se trouvant autour de l'axe de rotation (116), où le détecteur de Hall (114) est décalé de l'axe de rotation (116) dans la direction de l'aimant permanent (118) à forme d'anneau partiel, où il est prévu un plan de court-circuit (100) en matériau ferromagnétique qui s'étend jusqu'à l'axe de rotation (116), où le détecteur de Hall (114) est décalé vers le seul aimant permanent (118) à forme d'anneau partiel et où le champ magnétique se forme d'une façon symétrique autour d'un plan de réflexion parallèle aux lignes de champ dans la position moyenne du détecteur de Hall (114).

2. Détecteur magnétique d'angle de rotation selon la revendication 1, dans lequel une fente est ménagée entre les extrémités de l'aimant permanent (118) à forme d'anneau partiel et le plan de court-circuit.

3. Détecteur magnétique d'angle de rotation selon la revendication 2, dans lequel les parois des fentes (20) sont parallèles l'une à l'autre.

4. Détecteur magnétique d'angle de rotation selon l'une des revendications précédentes, dans lequel l'aimant permanent (118) à forme d'anneau partiel est polarisé dans le sens radial par rapport à l'axe de rotation.

5. Détecteur magnétique d'angle de rotation selon l'une des revendications 1 à 3, dans lequel le au moins un aimant permanent (118) à forme d'anneau partiel est polarisé dans le sens diamétral parallèlement à la surface de détection du détecteur de Hall (114) dans la position moyenne.

6. Détecteur magnétique d'angle de rotation selon l'une des revendications 1 à 5, dans lequel l'aimant permanent (118) à forme d'anneau partiel a la forme d'un demi-cercle et est entouré par une bague semi-circulaire en matériau ferromagnétique qui s'étend jusqu'au plan de court-circuit (100).

7. Utilisation d'un détecteur magnétique d'angle de rotation selon l'une des revendications précédentes en vue de la détermination de la position angulaire de l'arbre d'un papillon de régulation des gaz dans un moteur à combustion interne.
